# EUROPEAN PATENT APPLICATION

(11) **EP 2 749 944 A2**
(43) Date of publication of application: **02.07.2014**
(21) Application number: 13192924.2
(22) Date of filing: 14.11.2013
(51) Int. Cl.: G03B 42/00

(54) **Radiographic image reading device, program, and radiographic image reading method**

(30) Priority: 27.12.2012 JP 2012285753
(71) Applicant: Fujifilm Corporation, Minato-ku Tokyo (JP)
(72) Inventor: Ishikawa, Hiromi, Kanagawa (JP); Ogura, Nobuhiko, Kanagawa (JP); Ohta, Yasunori, Kanagawa (JP)
(74) Representative: Klunker . Schmitt-Nilson . Hirsch

(57) **Abstract**

A radiographic image reading device (2) includes: a casing (10) that has a conveyance inlet/outlet (12b) for conveying in and conveying out a storage phosphor sheet (S) on which a radiographic image is recorded, and a discharge outlet (20) for discharging the storage phosphor sheet; an image reading unit (16) that reads the radiographic image recorded on a storage phosphor sheet that has been conveyed in from the conveyance inlet/outlet; and a conveyance unit (14) that conveys the storage phosphor sheet that has been conveyed in from the conveyance inlet/outlet to a read position at which reading is performed by the image reading unit and that conveys the storage phosphor sheet, from which the radiographic image has been read, to the conveyance inlet/outlet or the discharge outlet.

## Description

### BACKGROUND OF THE INVENTION

### Field of the Invention

The present invention pertains to a radiographic image reading device, a program, and a radiographic image reading method, and particularly relates to a radiographic image reading device, a program, and a radiographic image reading method for reading radiographic images recorded on storage phosphor sheets.

### Description of the Related Art

Conventionally, storage phosphors have been utilized to capture radiographic images. A storage phosphor is a phosphor which, upon being irradiated with radiation such as X-rays, stores some of the energy of that radiation. Furthermore, when the storage phosphor is irradiated with excitation light such as visible light after having stored some of the energy of the radiation, it emits photostimulated luminescence light corresponding to the stored energy.

When a storage phosphor is utilized to capture a radiographic image, first, radiation that has passed through a subject such as a human body is applied to a sheet having a storage phosphor layer (hereinafter called a "storage phosphor sheet"), whereby a radiographic image is recorded on the storage phosphor sheet. Next, the storage phosphor sheet on which the radiographic image has been recorded is two-dimensionally scanned with excitation light such as laser light to thereby produce photostimulated luminescence light, and this photostimulated luminescence light is read by photoelectric conversion to generate image signals. Then, on the basis of the generated image signals, the radiographic image of the subject is output as a visible image on a recording material such as a photographic photosensitive material or a display device such as a liquid crystal display. Storage phosphor sheets are also called photostimulable phosphor sheets, but here they will be called storage phosphor sheets.

As a related technology, Japanese Patent Application Laid-Open (JP-A) No. H04-340950 discloses a radiographic image reading device that reads a radiographic image recorded on a storage phosphor sheet. This radiographic image reading device is provided with a cassette loading unit for loading a cassette that holds the storage phosphor sheet. Furthermore, this radiographic image reading device is provided with a reading unit that reads the radiographic image recorded on the storage phosphor sheet and a conveyance device that conveys the storage phosphor sheet. Furthermore, this radiographic image reading device is provided with an erase unit that is disposed in the conveyance device between the cassette loading unit and the reading unit and erases the radiographic image remaining on the storage phosphor sheet after the reading ends. Moreover, this radiographic image reading device is provided with a stack zone that is disposed branching from the conveyance device between the cassette loading unit and the reading unit and holds at least one storage phosphor sheet of only a predetermined size.

In this radiographic image reading device, in a case where the size of the storage phosphor sheet is not the predetermined size, the radiographic image reading device conveys the storage phosphor sheet out as is, but in a case where the size of the storage phosphor sheet is the predetermined size, the radiographic image reading device branchingly conveys the storage phosphor sheet to the stack zone.

Currently-used radiographic image reading devices are generally ed to perform reading processing on storage phosphor sheets having recorded thereon a radiographic image in which the subject is a human body or the like. However, in recent years, there has been the desire for radiographic image reading devices to be able to read, in addition to storage phosphor sheets such as these, storage phosphor sheets used in the non-destructive inspection of structures such as petroleum pipes.

However, for example, when a storage phosphor sheet is used in the non-destructive inspection of a petroleum pipe, generally the radiographic image is captured by wrapping a longer-than-usual storage phosphor sheet around a petroleum pipe having a diameter of about 50 cm and then applying X-rays from inside. The entire size of the long storage phosphor sheet in this case can sometimes exceed 1 m. For this reason, it has been difficult for radiographic image reading devices to perform reading processing on storage phosphor sheets having recorded thereon a radiographic image in which the subject is a human body or the like to perform reading processing on the long storage phosphor sheets.

With respect to this, the radiographic image reading device described in JP-A No. H04-340950 can branchingly convey storage phosphor sheets in accordance with the sizes of the storage phosphor sheets. However, this radiographic image reading device has a configuration that conveys the storage phosphor sheet in from the cassette loaded in the cassette loading unit, performs image read processing and erase processing steps, and conveys the storage phosphor sheet back out to the cassette. For that reason, the radiographic image reading device cannot hold, inside the device, a storage phosphor sheet having a size equal to or greater than the length with respect to the conveyance path by the conveyance device, and so the size of the storage phosphor sheets which is an object for read processing ends up being restricted.

It is also conceivable to increase the size of the radiographic image reading device in order to read radiographic images recorded on long storage phosphor sheets. However, in this case, there arises the need to increase the size of the radiographic image reading device the larger the size of the storage phosphor sheet which is an object for read processing becomes, which is not realistic.

### SUMMARY OF THE INVENTION

The present invention has been made in view of the above circumstances and provides a radiographic image reading device, a program, and a radiographic image reading method.

According to an aspect of the present invention, there is provided a radiographic image reading device that includes: a casing that has a conveyance inlet/outlet for conveying in and conveying out a storage phosphor sheet on which a radiographic image is recorded, and a discharge outlet for discharging the storage phosphor sheet; an image reading unit that is disposed inside the casing and that reads the radiographic image recorded on a storage phosphor sheet which has been conveyed in from the conveyance inlet/outlet; and a conveyance unit that is disposed inside the casing, that conveys the storage phosphor sheet that has been conveyed in from the conveyance inlet/outlet to a read position at which reading is performed by the image reading unit, and that conveys the storage phosphor sheet, from which the radiographic image has been read by the image reading unit, to the conveyance inlet/outlet or the discharge outlet.

According to the radiographic image reading device pertaining to the present invention, the conveyance inlet/outlet for conveying in and conveying out the storage phosphor sheet on which the radiographic image is recorded and the discharge outlet for discharging the storage phosphor sheet are disposed in the casing. Furthermore, in the present invention, the radiographic image which is recorded on the storage phosphor sheet which has been conveyed in from the conveyance inlet/outlet is read by the image reading unit which is disposed inside the casing.

Here, in the present invention, the storage phosphor sheet which has been conveyed in from the conveyance inlet/outlet is conveyed, by the conveyance unit which is disposed inside the casing, to the read position at which reading is performed by the image reading unit, and the storage phosphor sheet from which the radiographic image has been read by the image reading unit is conveyed, by the conveyance unit which is disposed inside the casing, to the conveyance inlet/outlet or the discharge outlet.

In this way, according to the radiographic image reading device of the present invention, the storage phosphor sheet from which the radiographic image has been read can not only be conveyed out from the conveyance inlet/outlet but can also be discharged from the discharge outlet. Here, according to the radiographic image reading device of the present invention, in a case in which the size, with respect to the conveyance direction by the conveyance unit, of the storage phosphor sheet is relatively large, the storage phosphor sheet is discharged from the discharge outlet. According to the radiographic image reading device of the present invention, the radiographic image can be read regardless of the size of the storage phosphor sheet which is an object for the read processing without leading to an increase in the size of the device.

The radiographic image reading device pertaining to the present invention may further include a length judging unit that judges whether or not a length, with respect to a conveyance direction, of the storage phosphor sheet is equal to or greater than a predetermined threshold value. Because of this, the radiographic image recorded on the storage phosphor sheet can be read in accordance with the size of the storage phosphor sheet which is an object for the read processing.

Furthermore, the radiographic image reading device pertaining to the present invention may further include a control unit that controls the conveyance unit. In a case in which it has been judged by the length judging unit that the length, with respect to the conveyance direction, of the storage phosphor sheet is shorter than the predetermined threshold value, the control unit may perform control, with respect to the conveyance unit, to cause the storage phosphor sheet to be conveyed along a reciprocal conveyance path that returns the storage phosphor sheet to the conveyance inlet/outlet by conveying the storage phosphor sheet back along the conveyance path travelled thus far, after the reading of the radiographic image by the image reading unit has ended, and in a case in which it has been judged by the length judging unit that the length is equal to or greater than the threshold value, the control unit may perform control, with respect to the conveyance unit, to cause the storage phosphor sheet to be discharged from the discharge outlet by performing only unidirectional conveyance on the reciprocal conveyance path, after the reading of the radiographic image by the image reading unit has ended. Because of this, even if the size of the storage phosphor sheet which is an object for the read processing is a long size longer than the length along the conveyance path from the read position by the image reading unit to the terminal end position of the conveyance path by conveyance unit, the radiographic image recorded on the storage phosphor sheet can be read.

Furthermore, in the radiographic image reading device pertaining to the present invention, the predetermined threshold value may be the length, along the conveyance path, of the storage phosphor sheet from the read position at which reading is performed by the image reading unit to the discharge outlet. Because of this, the leading end of the storage phosphor sheet which is an object for the read processing can be prevented from contacting the discharge outlet.

Furthermore, the radiographic image reading device pertaining to the present invention may further include a control unit that controls the conveyance unit and the image reading unit. In a case in which it has been judged by the length judging unit that the length, with respect to the conveyance direction, of the storage phosphor sheet is equal to or greater than the predetermined threshold value, the control unit may perform control, with respect to the image reading unit and the conveyance unit, to cause the storage phosphor sheet to be read by the image reading unit while causing an end portion of the storage phosphor sheet to project from the casing via the discharge outlet, and the control unit may perform control, with respect to the conveyance unit, to return the storage phosphor sheet to the conveyance inlet/outlet, and in a case in which it has been judged by the length judging unit that the length is shorter than the threshold value, the control unit may perform control, with respect to the image reading unit and the conveyance unit, to cause the storage phosphor sheet to be read by the image reading unit without allowing an end portion of the storage phosphor sheet to project from the casing via the discharge outlet. Because of this, even if the size of the storage phosphor sheet which is an object for the read processing is a long size longer than the length along the conveyance path from the read position by the image reading unit to the terminal end position of the conveyance path, the radiographic image recorded on the storage phosphor sheet can be read.

Furthermore, the radiographic image reading device pertaining to the present invention may further include an external input unit for inputting, from an external device, information indicating the length, with respect to the conveyance direction by the conveyance unit, of the storage phosphor sheet, and the length judging unit may perform the judgment on the basis of the length indicated by the information input by the external input unit. Because of this, the size of the storage phosphor sheet which is an object for the read processing can be easily acquired.

Furthermore, the radiographic image reading device pertaining to the present invention may further include a length measuring unit that measures the length, with respect to the conveyance direction, of the storage phosphor sheet, and the length judging unit may perform the judgment on the basis of the length measured by the length measuring unit. Because of this, the size of the storage phosphor sheet can be recognized even if the size of the storage phosphor sheet which is an object for the read processing is not input by a user.

Furthermore, in the radiographic image reading device pertaining to the present invention, the conveyance inlet/outlet may be disposed at one end of a conveyance path of the conveyance unit, and the discharge outlet may be disposed at the other end of the conveyance path. Because of this, the storage phosphor sheet can be efficiently conveyed.

Furthermore, the radiographic image reading device pertaining to the present invention may further include a blocking unit that is disposed at the discharge outlet and that blocks an incidence of light from outside the casing. Because of this, light can be prevented from being made incident inside the casing from outside the casing via the discharge outlet.

Furthermore, in the radiographic image reading device pertaining to the present invention, the discharge outlet may be disposed such that it may be freely opened and closed. Because of this, in the case of conveying the storage phosphor sheet which is an object for reading out from the conveyance inlet/outlet, light can be prevented from being made incident inside the casing from outside the casing via the discharge outlet.

Furthermore, in the radiographic image reading device pertaining to the present invention, the discharge outlet may be disposed such that it may be freely opened and closed, and the radiographic image reading device may further include a detection unit that detects the open/closed state of the discharge outlet, and a report unit that reports error information in a case in which the length, with respect to a conveyance direction of the conveyance unit, of the storage phosphor sheet is equal to or greater than a predetermined threshold value and an open/closed state detected by the detection unit is a closed state, or in a case in which the length is shorter than the predetermined threshold value and the open/closed state detected by the detection unit is an open state. Because of this, the user can be prompted to perform an operation to switch the discharge outlet to an open or closed state.

Furthermore, in the radiographic image reading device pertaining to the present invention, the discharge outlet may be disposed such that it may be freely opened and closed, and the radiographic image reading device may further include a setting unit that sets the discharge outlet to a closed state in a case in which it has been judged by the length judging unit that the length is shorter than the threshold value and that sets the discharge outlet to an open state in a case in which it has been judged by the length judging unit that the length is equal to or greater than the threshold value. Because of this, the discharge opening can be set to an open state only in a case in which the storage phosphor sheet which is an object for reading is to be discharged from the discharge outlet.

Moreover, according to another aspect of the present invention, there is provided a program for causing a computer of a radiographic image reading device that includes: a casing that has a conveyance inlet/outlet for conveying in and conveying out a storage phosphor sheet on which a radiographic image recorded, and a discharge outlet for discharging the storage phosphor sheet; an image reading unit that is disposed inside the casing and that reads the radiographic image recorded on a storage phosphor sheet that has been conveyed in from the conveyance inlet/outlet; and a conveyance unit that is disposed inside the casing, that conveys the storage phosphor sheet that has been conveyed in from the conveyance inlet/outlet to a read position at which reading is performed by the image reading unit, and that conveys the storage phosphor sheet, from which the radiographic image has been read by the image reading unit, to the conveyance inlet/outlet or the discharge outlet, to function as: a length judging unit that judges whether or not a length, with respect to a conveyance direction, of the storage phosphor sheet is equal to or greater than a predetermined threshold value; and a control unit that, in a case in which it has been judged by the length judging unit that the length, with respect to the conveyance direction, of the storage phosphor sheet is shorter than the predetermined threshold value, performs control, with respect to the conveyance unit, to cause the storage phosphor sheet to be conveyed along a reciprocal conveyance path that returns the storage phosphor sheet to the conveyance inlet/outlet by conveying the storage phosphor sheet along the conveyance travelled thus far, after the reading of the radiographic image by the image reading unit has ended and that, in a case in which it has been judged by the length judging unit that the length is equal to or greater than the threshold value, performs control, with respect to the conveyance unit, to cause the storage phosphor sheet to be discharged from the discharge outlet by performing only unidirectional conveyance on the reciprocal conveyance path, after the reading of the radiographic image by the image reading unit has ended.

Accordingly, according to the program pertaining to the present invention, a computer can be caused to act in the similar way as the radiographic image reading device pertaining to the present invention, so like the radiographic image reading device, the radiographic image can be read regardless of the size of the storage phosphor sheet which is an object for the read processing without leading to an increase in the size of the device.

Moreover, according to another aspect of the present invention, there is provided a radiographic image reading method of a radiographic image reading device that includes: a casing that has a conveyance inlet/outlet for conveying in and conveying out a storage phosphor sheet on which a radiographic image is recorded, and a discharge outlet for discharging the storage phosphor sheet; an image reading unit that is disposed inside the casing and that reads the radiographic image recorded on a storage phosphor sheet that has been conveyed in from the conveyance inlet/outlet; and a conveyance unit that is disposed inside the casing, that conveys the storage phosphor sheet that has been conveyed in from the conveyance inlet/outlet to a read position at which reading is performed by the image reading unit, and that conveys the storage phosphor sheet, from which the radiographic image has been read by the image reading unit, to the conveyance inlet/outlet or the discharge outlet, the radiographic image reading method including: judging whether or not a length, with respect to a conveyance direction, of the storage phosphor sheet is equal to or greater than a predetermined threshold value; and, in a case in which it has been judged that the length, with respect to the conveyance direction, of the storage phosphor sheet is shorter than the predetermined threshold value, performing control, with respect to the conveyance unit, to cause the storage phosphor sheet to be conveyed along a reciprocal conveyance path which returns the storage phosphor sheet to the conveyance inlet/outlet by conveying the storage phosphor sheet along the conveyance path travelled thus far, after the reading of the radiographic image by the image reading unit has ended, and, in a case in which it has been judged that the length is equal to or greater than the threshold value, performing control, with respect to the conveyance unit, to cause the storage phosphor sheet to be discharged from the discharge outlet by performing only unidirectional conveyance on the reciprocal conveyance path, after the reading of the radiographic image by the image reading unit has ended.

Accordingly, according to the radiographic image reading method pertaining to the present invention, the method acts in the similar way as the radiographic image reading device pertaining to the present invention, so like the radiographic image reading device, the radiographic image can be read regardless of the size of the storage phosphor sheet which is an object for the read processing without leading to an increase in the size of the device.

### BRIEF DESCRIPTION OF THE DRAWINGS

Embodiments of the present invention will be described in detail based on the following figures, wherein:
FIG. 1 is a schematic side view showing the configuration of a radiographic image reading system pertaining to a first embodiment, a third embodiment, and a fourth embodiment;
FIG. 2 is a main enlarged side view showing the configuration of a light blocking unit pertaining to the embodiments;
FIG. 3A is a block diagram showing the main configuration of functions of a radiographic image reading device pertaining to the embodiments;
FIG. 3B is a block diagram showing the main configuration of an electrical system of the radiographic image reading device pertaining to the embodiments;
FIG. 4 is a block diagram showing the main configuration of an electrical system of a control device pertaining to the embodiments;
FIG. 5 is a schematic side view provided for describing the mutual positional relationship between a first position sensor and a second position sensor in the radiographic image reading device pertaining to the embodiments;
FIG. 6A and 6B are flowcharts showing a flow of processing by a read control processing program pertaining to the first embodiment;
FIG. 7 is a flowchart showing a flow of processing by a discharge control processing program pertaining to the embodiments;
FIG. 8 is a schematic diagram provided for describing a method of controlling the light blocking unit in the read control processing pertaining to the embodiments;
FIG. 9A is a schematic diagram showing a display example of a warning screen pertaining to the embodiments;
FIG. 9B is a schematic diagram showing a display example of a warning screen pertaining to the embodiments;
FIG. 10 is a schematic side view showing the configuration of a radiographic image reading system pertaining to a second embodiment;
FIG. 11A and 11B are flowcharts showing a flow of processing by a read control processing program pertaining to the second embodiment;
FIG. 12A and 12B are flowcharts showing a flow of processing by a read control processing program pertaining to the third embodiment; and
FIG. 13A and 13B are flowcharts showing a flow of processing by a read control processing program pertaining to the fourth embodiment.

### DETAILED DESCRIPTION OF THE INVENTION

### [First Embodiment]

A radiographic image reading system (hereinafter called a "reading system") 1 pertaining to a first embodiment will be described in detail below using the attached drawings.

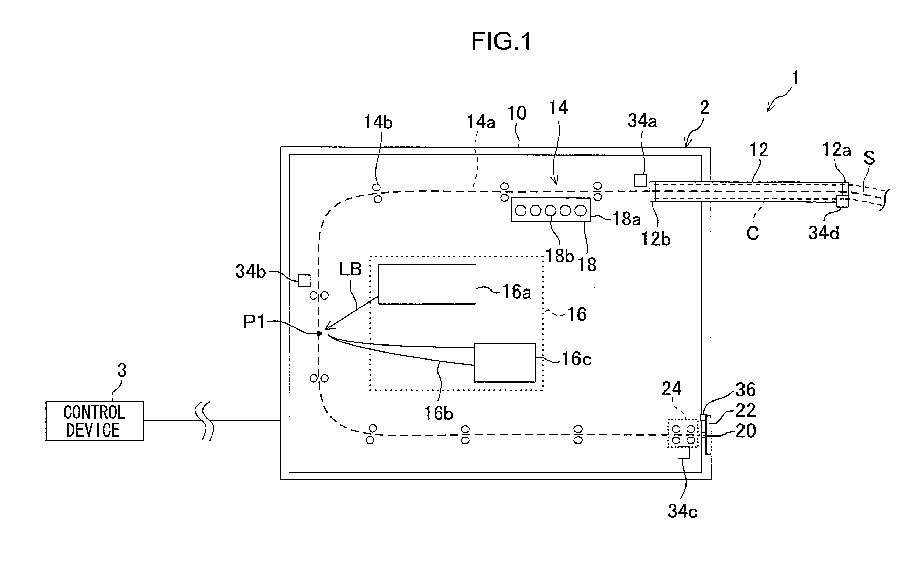

As shown in FIG. 1, the reading system 1 pertaining to the present embodiment is provided with a radiographic image reading device (hereinafter called a "reading device") 2 that reads a radiographic image from a storage phosphor sheet (hereinafter called a "sheet") S having the radiographic image recorded thereon. Furthermore, the reading system 1 is provided with a control device 3 that performs control of the reading device 2, for example, in accordance with instructions from a user. Storage phosphor sheets are also called photostimulable phosphor sheets, for example, but in the present specification they will be uniformly called storage phosphor sheets.

The sheet S which is an object for read processing by the reading device 2 in the present embodiment is, for example, a flexible sheet used to capture a radiographic image. The sheet S can be configured to include a support plate formed by a plastic such as polyethylene terephthalate (PET) resin or vinyl chloride resin and a phosphor layer that is formed on the upper surface of the support plate and exhibits photostimulated luminescence. Furthermore, a radiographic image is captured and recorded on the sheet S in a state in which the sheet S has been put into a radiographic image capturing device, for example.

The reading device 2 pertaining to the present embodiment directly conveys in the sheet S from a sheet case C holding the sheet S inside and reads the radiographic image from the sheet S that has been conveyed in. Furthermore, the reading device 2 can, after having read the radiographic image recorded on the sheet S, put the sheet S back into the sheet case C or discharge the sheet S from a later-described discharge outlet 20. The sheet case C pertaining to the present embodiment has a size corresponding to the size of the sheet S.

Here, the reading device 2 pertaining to the present embodiment is provided with a casing 10. A later-described conveyance unit 14, reading unit 16, and erase unit 18 are housed inside the casing 10, and the casing 10 has the property of blocking light from entering the inside of the casing 10. The light which is an object to be blocked in the present embodiment is light that ends up causing the energy of the radiation stored in the phosphor layer of the sheet S to disappear or be reduced. That is, the light which is an object to be blocked in the present embodiment is light of some wavelengths excluding the wavelength of the radiation applied to the phosphor layer of the sheet S when capturing a radiographic image; for example, visible light and ultraviolet light such as illumination light and sunlight that normally occurs indoors and outdoors corresponds thereto.

Furthermore, a receiving member 12 for receiving at least one end portion of the sheet case C in which the sheet S is held is disposed in part of the casing 10. The receiving member 12 has an open portion 12a for allowing at least one end portion of the sheet case C to be inserted into and removed from the receiving member 12. Furthermore, the receiving member 12 has, in its end portion on the opposite side of the open portion 12a, a conveyance inlet/outlet 12b that is an open portion for allowing the sheet S held in the sheet case C to be conveyed into the reading device 2 from the sheet case C and conveyed out from the reading device 2 into the sheet case C.

In the reading device 2 pertaining to the present embodiment, a suction cup (not shown in the drawings) that sucks and takes out the sheet S held in the sheet case C is disposed in the conveyance inlet/outlet 12b. Furthermore, a conveyance roller pair (not shown in the drawings) that sandwiches, from the front side and the back side, the sheet S taken out by the suction cup and holds and conveys the sheet S is disposed in the conveyance inlet/outlet 12b. However, the method of taking out the sheet S is not limited to this.

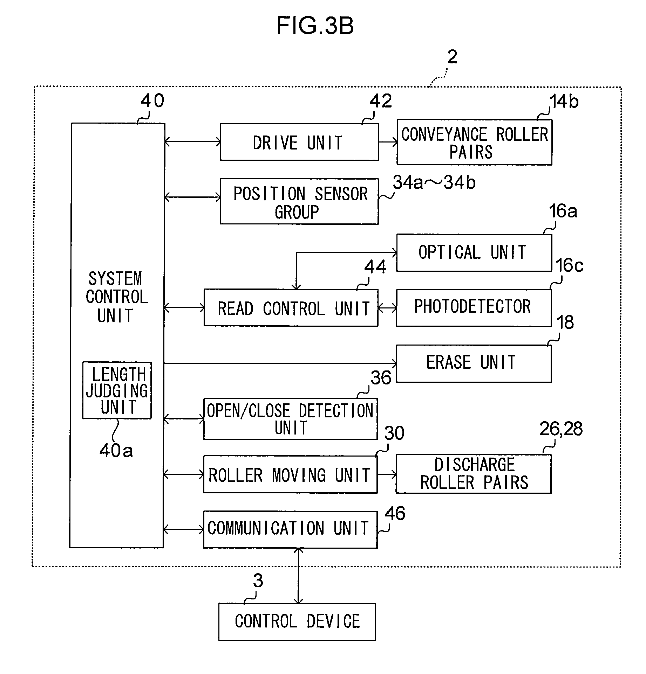

Furthermore, the conveyance unit 14, which conveys the sheet S conveyed in from the conveyance inlet/outlet 12b, is disposed inside the casing 10. The conveyance unit 14 is provided with plural conveyance roller pairs 14b that are disposed along a conveyance path 14a of the sheet S, with the conveyance inlet/outlet 12b serving as one end portion of the conveyance path 14a. Furthermore, the conveyance unit 14 is provided with a later-described drive unit 42 (see also FIG. 3B) such as a motor that drives the conveyance roller pairs 14b to rotate. The sheet S is conveyed along the conveyance path 14a in accordance with the rotation of the conveyance roller pairs 14b. The reading device 2 pertaining to the present embodiment is disposed with a guide plate (not shown in the drawings) that guides the movement of the sheet S along the conveyance path 14a. Because of this, the sheet S is reliably conveyed along the conveyance path 14a.

In the present embodiment, the conveyance path 14a is a reciprocal path that sequentially travels along the upper surface, the side surface, and the lower surface of the casing 10 while curving along each surface and then reverses its traveling direction to the opposite direction at a predetermined position of the lower surface. In the case of conveying the sheet S out from the conveyance inlet/outlet 12b, the sheet S travels both ways (reciprocating ways) along the conveyance path 14a, but in the case of discharging the sheet S from the later-described discharge outlet 20, the sheet S is discharged after being conveyed only unidirectional way (one way) along the conveyance path 14a. In this way, in the present embodiment, miniaturization of the reading device 2 is realized by making the conveyance path 14a a curved path.

The reading unit 16, which reads the radiographic image recorded on the conveyed sheet S, is disposed on an intermediate part of the conveyance path 14a. In the present embodiment, the reading unit 16 is disposed in the vicinity of the central part of the conveyance path 14a. Furthermore, the reading unit 16 has an optical unit 16a that scans the phosphor layer ofthe sheet S with a laser beam LB that is excitation light in a direction orthogonal to a conveyance direction of the sheet S (hereinafter called a "conveyance direction"). Furthermore, the reading unit 16 has a collector guide 16b that collects the photostimulated luminescence light representing the radiographic image which is released from the phosphor layer of the sheet S when the phosphor layer is excited by the laser beam LB. Moreover, the reading unit 16 has a photodetector 16c that converts the photostimulated luminescence light collected by the collector guide 16b into image signals that are electrical signals. In the present embodiment, a collector mirror (not shown in the drawings) for enhancing the collection efficiency of the photostimulated luminescence light is disposed in proximity to the collector guide 16b.

The erase unit 18, which erases the radiographic image remaining on the sheet S after read processing of the radiographic image by the reading unit 16 has ended, is disposed at the upstream side, with respect to the conveyance direction, of the reading unit 16 on the conveyance path 14a. The erase unit 18 has a box member 18a whose surface on the conveyance path 14a side is open. Furthermore, plural erase light sources 18b provided with cold cathode tubes are disposed inside the box member 18a. The erase unit 18 erases the radiographic image remaining on the sheet S by applying the light of the erase light sources 18b to the phosphor layer of the sheet S. In the reading device 2 pertaining to the present embodiment, the erase unit 18 is disposed in the neighborhood of the conveyance inlet/outlet 12b on the conveyance path 14a, but the installation position of the erase unit 18 is not limited to the neighborhood of the conveyance inlet/outlet 12b. It suffices for the erase unit 18 to be disposed at a position where, for example, the light from the erase light sources 18b can be prevented from being made incident on the reading unit 16.

Furthermore, the terminal end portion of the conveyance path 14a in the case of unidirectional conveyance is disposed extending as far as the neighborhood of the lower end portion of the casing 10. The discharge outlet 20, which is an open portion that penetrates the casing 10 and is for discharging the sheet S to the outside of the casing 10, is disposed in a region of the casing 10 including the terminal end portion of the conveyance path 14a. In the reading device 2 pertaining to the present embodiment, it is necessary to block as much as possible any light made incident inside the casing 10 from outside via the discharge outlet 20, so it is preferred that the open area of the discharge outlet 20 be reduced as much as possible. For that reason, in the present embodiment, the discharge outlet 20 has a size that is one size larger than the cross section of the sheet S in a direction orthogonal to the conveyance direction.

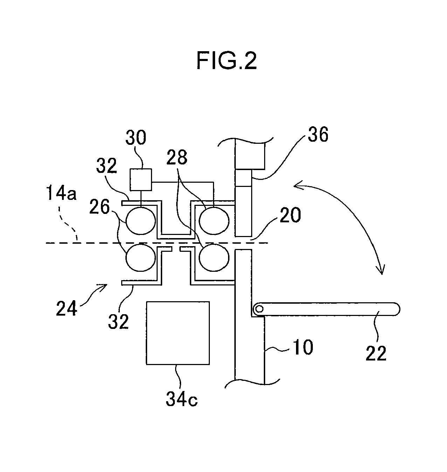

Furthermore, as shown in FIG. 1 and FIG. 2, a cover member 22 that opens and closes the discharge outlet 20 is disposed at the side of the casing 10 outside the discharge outlet 20. In the reading device 2 pertaining to the present embodiment, the cover member 22 is manually opened and closed by the user.

A light blocking unit 24 for preventing outside light from being made incident inside the casing 10 via the discharge outlet 20 in a case where the cover member 22 is open is disposed at the side of the casing 10 inside the discharge outlet 20. As shown in FIG. 2, in the light blocking unit 24 pertaining to the present embodiment, a first discharge roller pair 26 and a second discharge roller pair 28 that hold the sheet S on the conveyance path 14a are disposed in this order along the unidirectional direction of the conveyance. The first discharge roller pair 26 and the second discharge roller pair 28 pertaining to the present embodiment are light blocking rollers.

One roller in each of the first discharge roller pair 26 and the second discharge roller pair 28 is disposed in such a way that it may be freely moved toward and away from the other roller. In the present embodiment, a roller moving unit 30 that can separately move the roller on the upper side of each of the first discharge roller pair 26 and the second discharge roller pair 28 in an up-and-down direction is disposed. Hereinafter, a state in which the pairs of rollers in each of the first discharge roller pair 26 and the second discharge roller pair 28 are a predetermined distance or more away from each other will be called an "open state", and a state in which the pairs of rollers in each of the first discharge roller pair 26 and the second discharge roller pair 28 are in contact with one another will be called a "closed state". The predetermined distance is a distance longer than the thickness of the sheet S.

The outer peripheral portions of the rollers in each of the first discharge roller pair 26 and the second discharge roller pair 28 pertaining to the present embodiment are formed by elastic bodies (in the present embodiment, rubber). For that reason, in a case where the pairs of rollers in each of the first discharge roller pair 26 and the second discharge roller pair 28 are in the closed state while holding the sheet S, the rollers closely contact the sheet S. Furthermore, in a case where the pairs of rollers in each of the first discharge roller pair 26 and the second discharge roller pair 28 are in the closed state without holding the sheet S, the rollers closely contact one another. Consequently, by putting at least one roller pair of the first discharge roller pair 26 and the second discharge roller pair 28 in the closed state, outside light can be prevented from being made incident inside the casing 10 via the discharge outlet 20 even in a case where the cover member 22 is open.

Light blocking walls 32 are disposed around the first discharge roller pair 26 and the second discharge roller pair 28. The light blocking walls 32 are for preventing the incidence of light via the discharge outlet 20 and a space disposed as a movable region for the rollers of the first discharge roller pair 26 and the second discharge roller pair 28.

In the reading device 2 pertaining to the present embodiment, three sensors comprising a first position sensor 34a, a second position sensor 34b, and a third position sensor 34c that detect the presence of the sheet S are disposed at the conveyance path 14a. In the reading device 2 pertaining to the present embodiment, the first position sensor 34a is disposed in the neighborhood of the conveyance inlet/outlet 12b. Furthermore, the second position sensor 34b is disposed in the neighborhood, and on the conveyance direction upstream side, of a read position (hereinafter called a "read position") P1 of the radiographic image by the reading unit 16. Moreover, the third position sensor 34c is disposed between the first discharge roller pair 26 and the second discharge roller pair 28.

Furthermore, a fourth position sensor 34d that detects the presence of the sheet S is disposed at the receiving member 12. The position of the fourth position sensor 34d is a position whose distance from the conveyance inlet/outlet 12b as extended along the conveyance path 14a is equal to a predetermined threshold value (a later-described threshold value for determining whether or not the sheet S is a long size).

In the reading device 2 pertaining to the present embodiment, light reflecting sensors are applied as the first position sensor 34a, the second position sensor 34b, the third position sensor 34c, and the fourth position sensor 34d. The first position sensor 34a, the second position sensor 34b, the third position sensor 34c, and the fourth position sensor 34d each have a light emitter that emits light toward the sheet S and a detector that detects reflection light produced as a result of the light emitted from the light emitter being reflected by the sheet S. However, the first position sensor 34a, the second position sensor 34b, the third position sensor 34c, and the fourth position sensor 34d are not limited to being light reflecting sensors and may also, for example, be light transmitting sensors.

Furthermore, an open/close detection unit 36 that detects the open/closed state of the cover member 22 is disposed in the neighborhood of the discharge outlet 20 of the casing 10. In the reading device 2 pertaining to the present embodiment, the open/close detection unit 36 has a light emitter that emits light toward one end portion of the cover member 22 in a case where the cover member 22 is closed and a detector that detects reflection light produced as a result of the light emitted from the light emitter being reflected by the cover member 22. The open/close detection unit 36 pertaining to the present embodiment transmits a signal indicating that the cover member 22 is in an open state in a case where the quantity of detected light is equal to or greater than a predetermined threshold value and transmits a signal indicating that the cover member 22 is in a closed state in a case where the quantity of detected light is less than the threshold value. However, the method of detecting the open/closed state of the cover member 22 is not limited to this and may also, for example, be a method that detects the open/closed state of the cover member 22 using a switch that becomes switched on or off depending on the open/closed state of the cover member 22.

Next, the main configuration of functions of the reading device 2 pertaining to the present embodiment will be described.

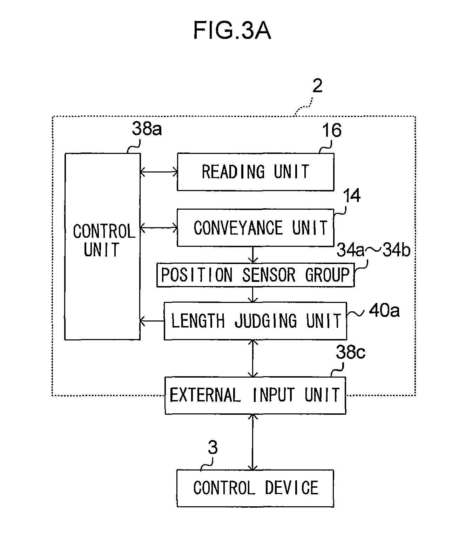

As shown in FIG. 3A, the reading device 2 has the reading unit 16, which is disposed inside the casing 10 and reads the radiographic image recorded on the sheet S conveyed in from the conveyance inlet/outlet 12b. Furthermore, the reading device 2 has a length judging unit 40a that judges whether or not the length, with respect to the conveyance direction, of the sheet S is equal to or greater than a predetermined threshold value. The length judging unit 40a pertaining to the present embodiment performs the judgment on the basis of detection signals from the first position sensor 34a, the second position sensor 34b, the third position sensor 34c, and the fourth position sensor 34d. Furthermore, the reading device 2 has an external input unit 38c for allowing an external device (in the present embodiment, the control device 3) to input information indicating the length, with respect to the conveyance direction by the conveyance unit 14, of the sheet S. The length judging unit 40a may also perform the judgment on the basis of the length indicated by the information input by the external input unit 38c.

Furthermore, the reading device 2 is provided with a control unit 38a that controls the conveyance by the conveyance unit 14. For example, let it be assumed that it has been judged by the length judging unit 40a that the length, with respect to the conveyance direction, of the sheet S is shorter than the predetermined threshold value. In this case, the control unit 38a performs control with respect to the conveyance unit 14 to cause the sheet S to be conveyed along the reciprocal conveyance path that returns the sheet S to the conveyance inlet/outlet 12b by conveying the sheet S back along the conveyance path travelled thus far (upstream on the conveyance path up until then), after the reading of the radiographic image by the reading unit 16 has ended. Furthermore, for example, let it be assumed that it has been judged by the length judging unit 40a that the length is equal to or greater than the threshold value. In this case, the control unit 38a performs control with respect to the conveyance unit 14 to cause the sheet S to be discharged from the discharge outlet 20 by having the conveyance unit 14 perform only unidirectional conveyance on the reciprocal conveyance path after the reading of the radiographic image by the reading unit 16 has ended.

Next, the main configuration of an electrical system of the reading device 2 pertaining to the present embodiment will be described.

As shown in FIG. 3B, the reading device 2 is disposed with a system control unit 40 that collectively controls each part of the reading device 2. The system control unit 40 has a central processing unit (CPU), a random access memory (RAM), a read-only memory (ROM), and a hard disk drive (HDD).

The drive unit 42, the first position sensor 34a, the second position sensor 34b, the third position sensor 34c, the fourth position sensor 34d, the erase unit 18, the open/close detection unit 36, and the roller moving unit 30 are electrically connected to the system control unit 40. The system control unit 40 controls the rotational driving of the conveyance roller pairs 14b via the drive unit 42 and receives the detection signals from the first position sensor 34a, the second position sensor 34b, the third position sensor 34c, and the fourth position sensor 34d. Furthermore, the system control unit 40 controls the operation of the erase unit 18, receives the detection signal from the open/close detection unit 36, and controls the moving of the discharge roller pairs 26 and 28 via the roller moving unit 30.

The system control unit 40 corresponds to the control unit 38a and the length judging unit 40a. In the present embodiment, as shown in FIG. 3B, the length judging unit 40a is incorporated inside the system control unit 40, and the function of switching the conveyance direction of the sheet S is configured by software, but the system control unit 40 is not limited to this. For example, the length judging unit 40a may also be disposed separately from the system control unit 40 in the reading device 2, and the function of switching the conveyance direction of the sheet S in accordance with the judgment result of the length judging unit 40a may also be configured by hardware.

Furthermore, a read control unit 44 and a communication unit 46 are also electrically connected to the system control unit 40.

The read control unit 44 pertaining to the present embodiment controls the operation of the optical unit 16a on the basis of the control by the system control unit 40 and transmits to the system control unit 40 the detection signal output from the optical detector 16c in order to read the radiographic image recorded on the sheet S. The read control unit 44 corresponds to the reading unit 16. Furthermore, hereinafter, the series of processes performed by the read control unit 44 will be called read processing.

Furthermore, the communication unit 46 pertaining to the present embodiment is provided with a communication interface for intercommunicating with the control device 3, and the communication unit 46 communicates with the control device 3 on the basis of the control by the system control unit 40. Consequently, the system control unit 40 can transmit and receive various types of information to and from the control device 3 via the communication unit 46. The communication unit 46 corresponds to the external input unit 38c.

Next, the main configuration of an electrical system ofthe control device 3 pertaining to the present embodiment will be described.

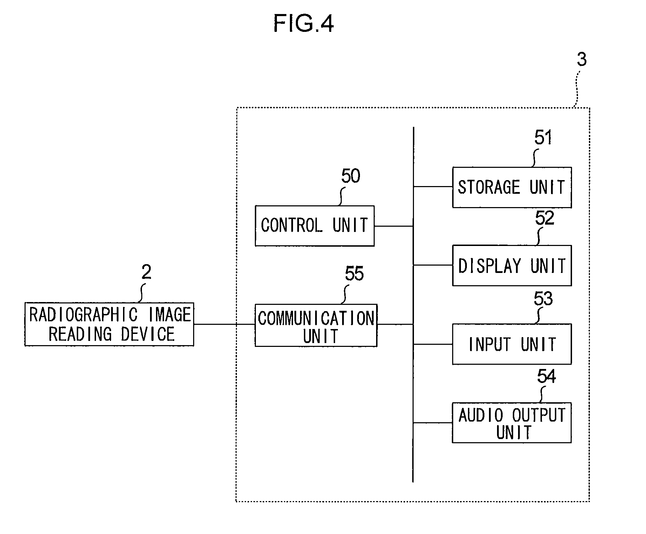

As shown in FIG. 4, the control device 3 is provided with a control unit 50 that has a CPU and collectively controls each part of the control device 3. Furthermore, the control device 3 is provided with a storage unit 51 that has a ROM and an HDD that store programs and various types of data necessary for the control by the control unit 50.

Furthermore, the control device 3 is provided with a display unit 52 such as a liquid crystal display that displays various types of information on the basis of the control by the control unit 50 and an input unit 53 such as a keyboard and/or mouse for inputting various types of information by operation by a user. Furthermore, the control device 3 is provided with an audio output unit 54 that outputs audio on the basis ofthe control by the control unit 50. Moreover, the control device 3 is provided with a communication unit 55 that transmits and receives various types of information to and from the communication unit 46 of the reading device 2 on the basis of the control by the control unit 50.

Here, in the reading system 1 pertaining to the present embodiment, in a case where the length, with respect to the conveyance direction, of the sheet S which is an object for reading is shorter than the predetermined threshold value, the sheet S on which the read processing of the radiographic image has been performed is conveyed out from the conveyance inlet/outlet 12b. On the other hand, in a case where the length, with respect to the conveyance direction, of the sheet S which is an object for reading is equal to or greater than the predetermined threshold value, the sheet S on which the read processing of the radiographic image has been performed is discharged from the discharge outlet 20.

In the reading device 2 pertaining to the present embodiment, a distance L2 from the read position P1 to a terminal end position P2 in the case of unidirectional conveyance on the conveyance path (hereinafter called a "terminal end position") is applied as the predetermined threshold value. This is because in a case where the length, in the conveyance direction, of the sheet S is longer than the distance L2, the leading end portion of the sheet S would end up reaching the terminal end position P2 while the reading device 2 is in the middle of reading the radiographic image recorded on the sheet S.

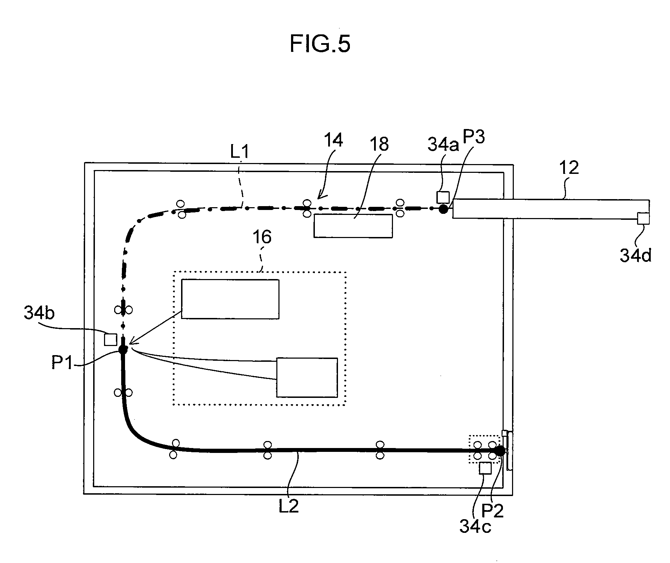

In the present embodiment, as shown in FIG. 5, a distance L1 along the conveyance path 14a from a detection position P3 of the first position sensor 34a to the detection position of the second position sensor 34b (the read position P1) is configured to be equal to the distance L2 from the read position P1 to the terminal end position P2. Thus, in a case where the sheet S has been detected at the same timing by the second position sensor 34b and the first position sensor 34a, it can be judged that the size of the sheet S is a long size. Below, it will be assumed that the size of the sheet S is a long size in a case where the length, with respect to the conveyance direction, of the sheet S is equal to or greater than the distance L2.

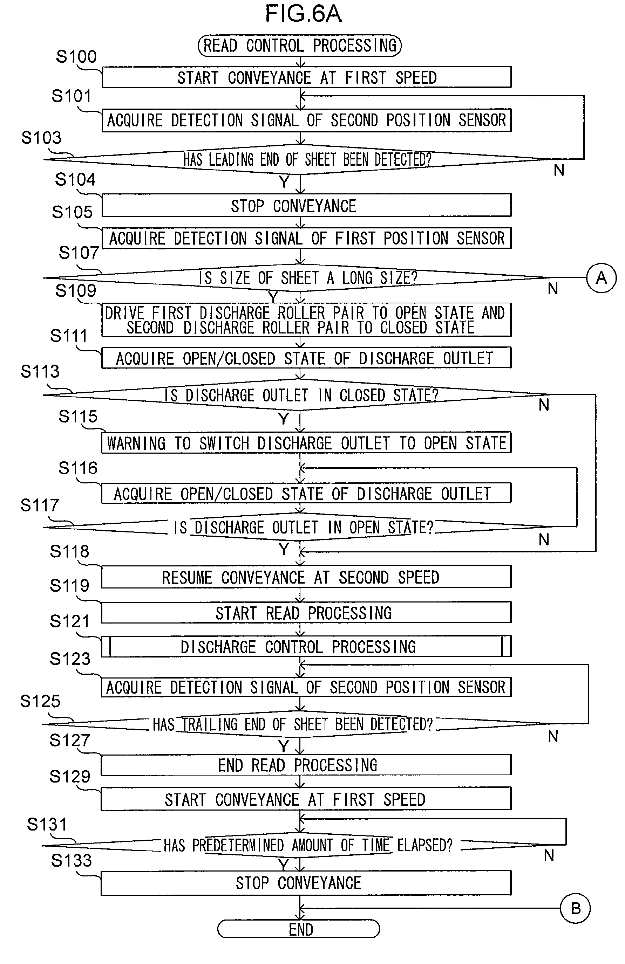

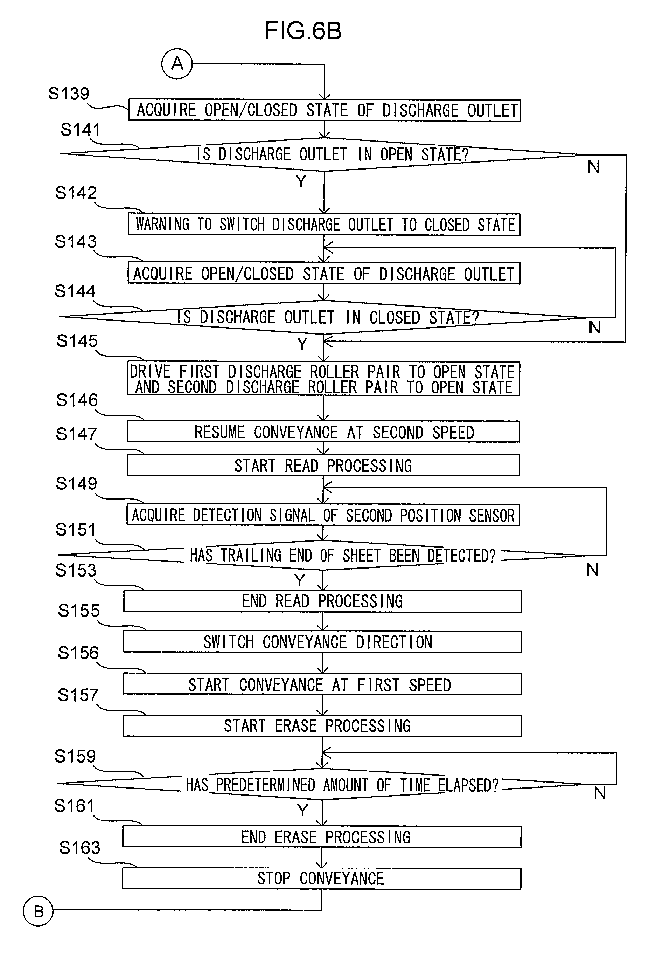

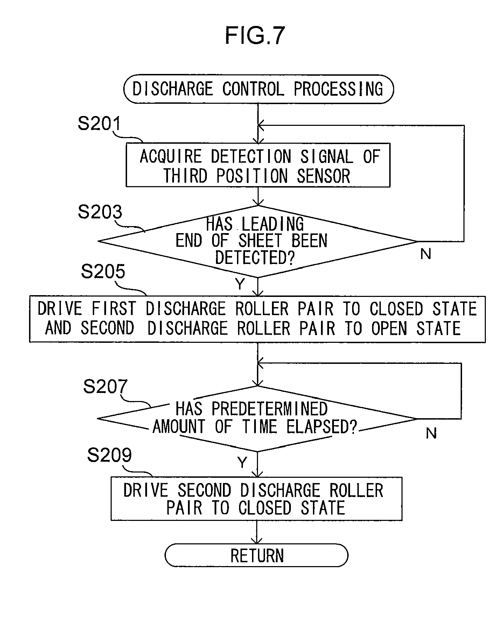

Next, the action of the reading system 1 pertaining to the present embodiment will be described with reference to FIG. 6A and 6B and FIG. 7. FIG. 6A and 6B are flowcharts showing a flow of processing by a read control processing program executed by the system control unit 40 of the reading device 2 when an instruction to execute the program has been input via the input unit 53 of the control device 3 after the sheet case C has been put into the receiving member 12 by the user. Furthermore, FIG. 7 is a flowchart showing a flow of processing by a discharge control processing routine program executed during the execution of the read control processing program. These programs are stored beforehand in a predetermined region of the ROM of the system control unit 40.

As shown in FIG. 6A, first, in step S100, the system control unit 40 performs control with respect to the conveyance unit 14 to start the conveyance of the sheet S at a predetermined conveyance speed (in the present embodiment, 100 mm/s; hereinafter called a "first speed").

In the next step S 101, the system control unit 40 acquires the detection signal of the second position sensor 3b. In the next step S103, the system control unit 40 determines whether or not the leading end of the sheet S has been detected on the basis of the acquired detection signal. In a case where the determination is no, the system control unit 40 returns to step S101. The system control unit 40 moves to step S 104 at the point in time when the determination becomes yes. In the present embodiment, the system control unit 40 determines that the leading end of the sheet S has been detected in a case where the system control unit 40 has transited from a state in which it is receiving from the second position sensor 34b a detection signal indicating a quantity of light lower than a predetermined first threshold value to a state in which it is receiving a detection signal indicating a quantity of light equal to or greater than the first threshold value.

In the next step S104, the system control unit 40 performs control with respect to the drive unit 42 to stop the conveyance of the sheet S. The system control unit 40 performs this control in order to allow the reading unit 16 to prepare to perform the read processing while the conveyance of the sheet S is temporarily stopped.

In the next step S105, the system control unit 40 acquires the detection signal of the first position sensor 34a. In the next step S107, the system control unit 40 determines whether or not the size of the sheet S is a long size on the basis of the acquired detection signal. In the reading device 2 pertaining to the present embodiment, the system control unit 40 determines that the size of the sheet S is a long size in a case where the sheet S is also being detected by the first position sensor 34a at the timing when the leading end of the sheet S has been detected by the second position sensor 34b.

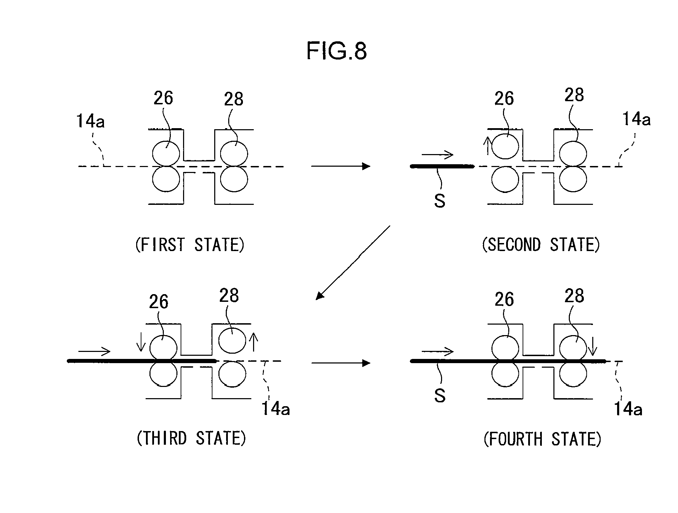

In a case where the determination in step 107 is yes, the system control unit 40 moves to step S109 where it controls the roller moving unit 30 in such a way that the first discharge roller pair 26 switches to the open state and the second discharge roller pair 28 switches to the closed state. For example, let it be assumed that the first discharge roller pair 26 and the second discharge roller pair 28 were both in the closed state at the point in time when the system control unit 40 started the read control processing program. In this case, as shown in FIG. 8 as an example, the first discharge roller pair 26 and the second discharge roller pair 28 transit from this state (a first state) to a second state in which the first discharge roller pair 26 switches to the open state and the second discharge roller pair 28 remains in the closed state. By leaving the second discharge roller pair 28 in the closed state, light is prevented from being made incident inside the casing 10 from outside the casing 10 via the discharge outlet 20 even in a case where the discharge outlet 20 is in an open state.

In the next step S111, the system control unit 40 acquires information indicating the open/closed state of the discharge outlet 20 by acquiring the signal indicating the open/closed state of the cover member 22 from the open/close detection unit 36.

In the next step S113, the system control unit 40 determines whether or not the discharge outlet 20 is in a closed state from the acquired information indicating the open/closed state of the cover member 22. In a case in which the determination is no, the system control unit 40 moves to step S118 described later. In a case where the determination is yes, the system control unit 40 moves to step S115.

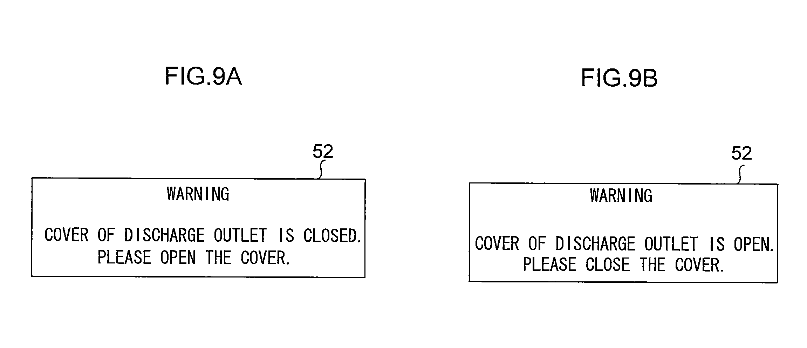

In step S 115, the system control unit 40 issues a warning to the user to switch the discharge outlet 20 to an open state. At this time, in the present embodiment, the system control unit 40 transmits information indicating an instruction to display the warning to the control device 3. In a case where the system control unit 40 performs the processing of step S 115 several times, the system control unit 40 transmits this information only the first time. When the control device 3 receives this information, it causes the display unit 52 to display, as shown in FIG. 9A as an example, a warning screen having a character string such as: "Cover of discharge outlet is closed. Please open the cover." The method by which the warning is issued is not limited to a method where a warning screen is displayed; for example, audio indicating the warning may also be output from the audio output unit 54. When the user checks this warning screen, for example, the user switches the discharge outlet 20 to an open state by opening the cover member 22.

In step S 116, the system control unit 40 acquires information indicating the open/closed state of the discharge outlet 20 by acquiring the signal indicating the open/closed state of the cover member 22 from the open/close detection unit 36. In the next step 117, the system control unit 40 determines whether or not the discharge outlet 20 is in an open state from the acquired information indicating the open/closed state of the cover member 22. In a case where the determination is no, the system control unit 40 returns to step S116. In a case where the determination is yes, the system control unit 40 moves to step S 118.

In step S 118, the system control unit 40 performs control with respect to the drive unit 42 to start the conveyance of the sheet S at a predetermined conveyance speed (in the present embodiment, 20 mm/s; hereinafter called a "second speed") that is slower than the first speed. The second speed is a conveyance speed of the sheet S suited for the read processing by the reading unit 16.

In the next step S119, the system control unit 40 performs control with respect to the read control unit 44 to start the read processing of reading the radiographic image recorded on the sheet S.

In the next step S 121, the system control unit 40 executes the discharge control processing routine program that performs light blocking so that outside light is not made incident inside the casing 10 via the discharge outlet 20 when the sheet S passes through the discharge outlet 20.

As shown in FIG. 7, first, in step S201, the system control unit 40 acquires the detection signal of the third position sensor 34c. In the next step S203, the system control unit 40 determines whether or not the leading end of the sheet S has been detected on the basis of the acquired detection signal. In a case where the determination is no, the system control unit 40 returns to step S201. The system control unit 40 moves to step S205 at the point in time when the determination becomes yes. In the present embodiment, the system control unit 40 detects whether or not the leading end of the sheet S has been detected by using the same method as the detection by the second position sensor 34b.

In step S205, the system control unit 40 controls the roller moving unit 30 in such a way that the first discharge roller pair 26 switches to the closed state and thereafter the second discharge roller pair 28 switches to the open state. By switching the first discharge roller pair 26 to the closed state before switching the second discharge roller pair 28 to the open state, light is prevented from being made incident inside the casing 10 from outside via the discharge outlet 20.

Specifically, as shown in FIG. 8 as an example, the first discharge roller pair 26 and the second discharge roller pair 28 transit from the second state to a third state in which the first discharge roller pair 26 switches to the closed state and the second discharge roller pair 28 switches to the open state.

In the next step S207, the system control unit 40 stands by until a predetermined amount of time elapses after the detection of the leading end of the sheet S by the third position sensor 34c. Thereafter, the system control unit 40 moves to step S209. The predetermined amount of time is an amount of time from when the leading end of the sheet S passes the detection position at the third position sensor 34c to until the leading end of the sheet S passes between the rollers of the second discharge roller pair 28. The predetermined amount of time is, for example, derived by dividing the distance on the conveyance path 14a from the position of the second discharge roller pair 28 to the terminal end position P2 by the conveyance speed (the second speed) at which the sheet S is conveyed by the conveyance unit 14.

In step S209, the system control unit 40 controls the roller moving unit 30 in such a way that the second discharge roller pair 28 switches to the closed state, and then the system control unit 40 ends the discharge control processing routine program. Specifically, as shown in FIG. 8 as an example, the first discharge roller pair 26 and the second discharge roller pair 28 transit from the third state to a fourth state in which the second discharge roller pair 28 also switches to the closed state in addition to the first discharge roller pair 26. In this way, by putting the second discharge roller pair 28 in the closed state, light is more reliably prevented from being made incident inside the casing 10 from outside via the discharge outlet 20.

When the discharge control processing routine program ends, the system control unit 40 moves to step S123 of the read control processing program (see FIG. 6A) where it acquires the detection signal of the second position sensor 34b. In the next step S125, the system control unit 40 determines whether or not the trailing end of the sheet S has been detected on the basis of the acquired detection signal. In a case where the determination is no, the system control unit 40 returns to step S123. In a case where the determination is yes, the system control unit 40 moves to step S 127. In the present embodiment, the system control unit 40 determines that the trailing end of the sheet S has been detected in a case where the system control unit 40 has transited from a state in which it is receiving a detection signal indicating a quantity of light equal to or greater than the first threshold value from the detector of the second position sensor 34b to a state in which it is receiving a detection signal indicating a quantity of light less than the first threshold value.

In the next step S127, the system control unit 40 performs control with respect to the read control unit 44 to end the read processing that was started in step S119. In the next step S129, the system control unit 40 performs control with respect to the drive unit 42 to switch the conveyance speed of the sheet S to the first speed. The system control unit 40 acquires image information indicating the radiographic image recorded on the sheet S by storing, in the HDD that the system control unit 40 has, the image signals received from the read control unit 44 during the processing from step S 119 to step S127.

In the next step S 131, the system control unit 40 stands by until a predetermined amount of time elapses. The predetermined amount of time is an amount of time from this point in time to until the trailing end of the sheet S is discharged from the discharge outlet 20. The predetermined amount of time is, for example, derived by dividing the distance from the read position P1 to the terminal end position P2 by the conveyance speed (the first speed).

In the next step S 133, the system control unit 40 performs control with respect to the drive unit 42 to stop the conveyance of the sheet S. Thereafter, the system control unit 40 ends the read control processing program. In a case where erase processing is to be performed with respect to the sheet S on which the read processing has been performed through the above processes, the sheet S is conveyed back into the casing 10 from the conveyance inlet/outlet 12b, is conveyed along the conveyance path 14a while being subjected to the erase processing, and is discharged from the discharge outlet 20. In this case, the sheet S is put back into the sheet case C, and the sheet case C is put into the receiving member 12. However, because the radiographic image that had been recorded on the sheet S has already been read, the sheet S may also be put into the receiving member 12 without being put into the sheet case C.

In a case where the determination was no in step S107, the system control unit 40 moves to step 139 where it acquires information indicating the open/closed state of the discharge outlet 20 by acquiring the signal indicating the open/closed state of the cover member 22 from the open/close detection unit 36.

In the next step S 141, the system control unit 40 determines whether or not the discharge outlet 20 is in an open state from the acquired information indicating the open/closed state of the cover member 22. In a case where the determination is yes, the system control unit 40 moves to step S 142. In a case in which the determination is no, the system control unit 40 moves to step S 145 described later.

In step S 142, the system control unit 40 issues a warning to the user to switch the discharge outlet 20 to a closed state. At this time, in the present embodiment, the system control unit 40 transmits information indicating an instruction to display the warning to the control device 3. In a case where the system control unit 40 performs the processing of step S 142 several times, the system control unit 40 transmits this information only the first time. When the control device 3 receives this information, it causes the display unit 52 to display, as shown in FIG. 9B as an example, a warning screen having a character string such as: "Cover of discharge outlet is open. Please close the cover." The method by which the warning is issued is not limited to a method where a warning screen is displayed; for example, audio indicating the warning may also be output from the audio output unit 54. When the user checks this warning screen, for example, the user switches the discharge outlet 20 to a closed state by closing the cover member 22.

In step S 143, the system control unit 40 acquires information indicating the open/closed state of the discharge outlet 20 by acquiring the signal indicating the open/closed state of the cover member 22 from the open/close detection unit 36. In the next step 144, the system control unit 40 determines whether or not the discharge outlet 20 is in a closed state from the acquired information indicating the open/closed state of the cover member 22. In a case where the determination is no, the system control unit 40 returns to step S143. In a case where the determination is yes, the system control unit 40 moves to step S145.

In step S 145, the system control unit 40 controls the roller moving unit 30 in such a way that both the first discharge roller pair 26 and the second discharge roller pair 28 switch to the open state. Because of this, the sheet S can be prevented from colliding with the rollers of the first discharge roller pair 26 and the second discharge roller pair 28 even in a case where the leading end of the sheet S has reached the installation position of the first discharge roller pair 26 and the second discharge roller pair 28.

In the next step S 146, the system control unit 40 performs control with respect to the drive unit 42 to switch the conveyance speed of the sheet S to the second speed. In the next step S 147, the system control unit 40 performs control with respect to the read control unit 44 to start the read processing of reading the radiographic image recorded on the sheet S.

In the next step S 149, the system control unit 40 acquires the detection signal of the second position sensor 34b. In the next step S151, the system control unit 40 determines whether or not the trailing end of the sheet S has been detected on the basis of the acquired detection signal. In a case where the determination is no, the system control unit 40 returns to step S 149. In a case where the determination is yes, the system control unit 40 moves to step S153. In the present embodiment, the system control unit 40 determines that the trailing end of the sheet S has been detected in a case where the system control unit 40 has moved from a state in which it is receiving a detection signal indicating a quantity of light equal to or greater than the first threshold value from the detector of the second position sensor 34b to a state in which it is receiving a detection signal indicating a quantity of light less than the first threshold value.

In the next step S 153, the system control unit 40 performs control with respect to the read control unit 44 to end the read processing that was started in step S 147. In the next step S155, the system control unit 40 performs control with respect to the drive unit 42 to switch the conveyance direction ofthe sheet S to the opposite direction. In the next step S156, the system control unit 40 performs control with respect to the drive unit 42 to switch the conveyance speed of the sheet S to the first speed.

In the next step S 157, the system control unit 40 performs control with respect to the erase unit 18 to start the erase processing of erasing the radiographic image recorded on the sheet S.

In the next step S 159, the system control unit 40 stands by until a predetermined amount of time elapses after the start of the conveyance of the sheet S at the first speed. The predetermined amount of time is an amount of time from this point in time to until the trailing end of the sheet S is discharged from the conveyance inlet/outlet 12b. The predetermined amount of time is, for example, derived by dividing the distance from the read position P1 to the position of the conveyance inlet/outlet 12b by the conveyance speed (the first speed).

In the next step S 161, the system control unit 40 performs control with respect to the erase unit 18 to stop the erase processing that was started in step S 157. In the next step S163, the system control unit 40 stops the conveyance of the sheet S. Thereafter, the system control unit 40 ends the read control processing program.

In the present embodiment, the system control unit 40 determines whether or not the size of the sheet S is a long size from the detection signals of the first position sensor 34a and the second position sensor 34b, but the method by which this determination is performed is not limited to this. For example, the control device 3 may store information indicating the length, with respect to the conveyance direction, of the sheet S, and the reading device 2 may receive this information from the control device 3, so that the system control unit 40 determines whether or not the size of the sheet S is a long size on the basis of the received information. In this case, the control device 3 stores information indicating the length, with respect to the conveyance direction, of the sheet S that has been input via the input unit 53, for example. Furthermore, in this case, the processing of steps S101 to S105 is omitted, and in step S 107 the system control unit 40 determines whether or not the size of the sheet S is a long size on the basis of the information received from the control device 3.

Furthermore, the method by which the system control unit 40 acquires the length, with respect to the conveyance direction, of the sheet S may also be a method wherein the system control unit 40 starts the conveyance of the sheet S and thereafter derives the length from the amount of time in which the first position sensor 34a continuously detects the sheet S and the conveyance speed of the sheet S.

Alternatively, the method by which the system control unit 40 determines whether or not the size of the sheet S is a long size may also be a method using the detection signal of the fourth position sensor 34d. That is, in a case where the conveyance direction length of the sheet S is longer than the distance from the conveyance inlet/outlet 12b to the fourth position sensor 34d, the sheet S (the sheet case C) is detected by the fourth position sensor 34d in a state in which the seat case C is in the receiving member 12. The system control unit 40 may utilize this to determine that the size of the sheet S is a long size in a case where the sheet S has been detected by the fourth position sensor 34d.

Furthermore, in the present embodiment, light is prevented from being made incident inside the casing 10 from outside via the discharge outlet 20 using the first discharge roller pair 26 and the second discharge roller pair 28, but the method of preventing light incidence is not limited to this. For example, at least one of a light blocking brush and a charge neutralizing brush may also be disposed instead of the discharge roller pairs in the neighborhood of the discharge outlet 20 inside the casing 10. Alternatively, at least one of a light blocking brush and a charge neutralizing brush may also be disposed instead of one discharge roller pair (e.g., the second discharge roller pair 28).

Furthermore, in the present embodiment, the leading end and the trailing end of the sheet S are detected using the first position sensor 34a, the second position sensor 34b, and the third position sensor 34c, but the method of detecting the leading end and the trailing end of the sheet S is not limited to this. For example, the distance along the conveyance path 14a from the conveyance inlet/outlet 12b to the reading unit 16 and the distance from the reading unit 16 to the discharge outlet 20 may also be stored beforehand, and the system control unit 40 may derive the conveyance distance from each of these distances and the conveyance speed of the sheet S.

Furthermore, in the present embodiment, the reading device 2 is provided with the second position sensor 34b in order to detect the arrival of the sheet S at the read position P1 and the passage of the sheet S by the read position P1, but it is not invariably necessary for the reading device 2 to be provided with the second position sensor 34b. For example, the reading device 2 may also be configured in such a way that it is not provided with the second position sensor 34b and performs the detection using the detection signal of the photodetector 16c instead of the detection signal by the second position sensor 34b.

Furthermore, in the present embodiment, the reading device 2 uses the roller moving unit 30 to switch the states of the first discharge roller pair 26 and the second discharge roller pair 28, but the reading device 2 is not limited to this. For example, the first discharge roller pair 26 and the second discharge roller pair 28 may also be movable rollers disposed in such a way that they may freely move a predetermined amount in the directions in which the rollers forming each pair move toward and away from one another. In this case, the rollers forming each pair move in the direction away from one another by an amount corresponding to the thickness of the sheet S in response to the sheet S entering between the rollers of each pair. At this time, the rollers forming each pair are configured to move in a state in which they are always in close contact with the sheet S, so outside light can be prevented from being made incident inside the casing 10 via the discharge outlet 20.

Furthermore, the reading device 2 may also be configured in such a way that, in a case where the size of the sheet S is a long size, the reading device 2 derives a predicted time when the sheet S will reach the position which is an object for detection by the third position sensor 34c and, in a case where the sheet S has not been detected by the third position sensor 34c at the predicted time, the reading device 2 stops the read processing. The predicted time is, for example, derived from the time when the leading end of the sheet S has been detected by the second position sensor 34b, the conveyance speed of the sheet S, and the distance from the detection position by the second position sensor 34b (the read position P1) to the detection position by the third position sensor 34c. Because of this, the read processing of the sheet S is prevented from being continued despite a state (a so-called jammed state) in which the sheet S has become jammed at some position along the conveyance path 14a.

Moreover, the read control processing and the discharge control processing may be realized not only by processing by software programs but also by a combination of hardware and software.

### [Second Embodiment]

A reading system 1A pertaining to a second embodiment will be described in detail below using the attached drawings. Configurations that are the same as the configurations in the first embodiment will be assigned the same reference signs, and redundant description of those same configurations will be omitted.

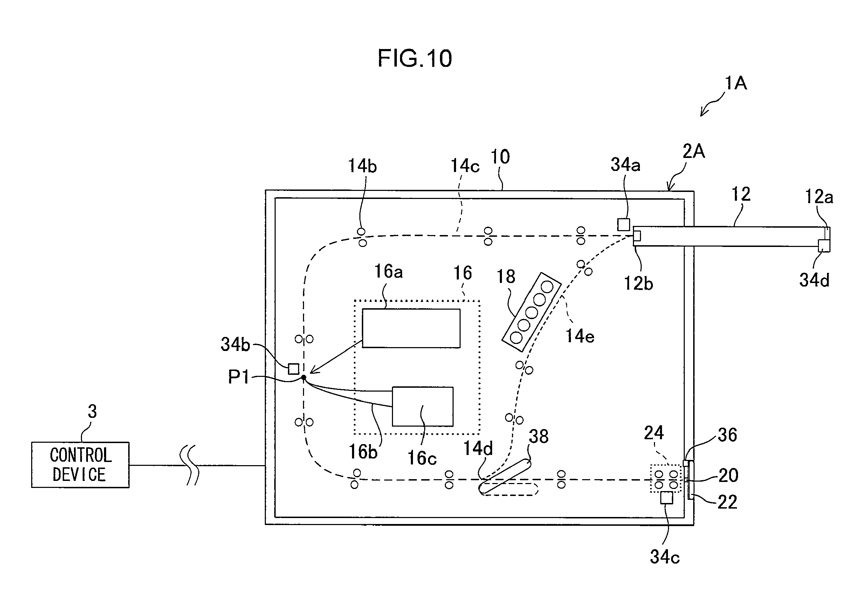

In the reading device 2 pertaining to the first embodiment, the conveyance path 14a that reciprocally conveys the sheet S is applied. In contrast, as shown in FIG. 10, in a reading device 2A pertaining to the second embodiment, a conveyance path 14c that branchingly conveys the sheet S in two directions in accordance with the length, with respect to the conveyance direction, of the sheet S in the middle of the conveyance path 14a is applied.

As shown in FIG. 10, the conveyance path 14c is a conveyance path where, on the conveyance path 14a of the first embodiment, a branching point 14d is disposed between the read position and the discharge outlet 20, and a new conveyance path 14e interconnecting the branching point 14d and the conveyance inlet/outlet 12b is disposed. A switch member 38 that switches the conveyance path of the sheet S is disposed at the branching point 14d. The switch member 38 is a tabular member that guides the movement of the sheet S by contacting the sheet S. The switch member 38 is formed in such a way that it may freely rotate about a rotational shaft (not shown in the drawings), has a motor or hydraulic or other drive device (not shown in the drawings), and changes its posture as a result of being driven to rotate by the drive device. Additionally, the switch member 38 changes its posture on the basis of the control by the system control unit 40, whereby the switch member 38 sets the conveyance direction of the sheet S to either one of a direction in which it conveys the sheet S from the branching point 14d toward the conveyance inlet/outlet 12b and a direction in which it conveys the sheet S from the branching point 14d toward the discharge outlet 20.

In the second embodiment, the erase unit 18 is disposed at a position where the position which is an object for the erase processing is on the conveyance path 14e.

Furthermore, in the present embodiment, at the stage before starting the read control processing, the switch member 38 is set to the direction in which it conveys the sheet S from the branching point 14d toward the conveyance inlet/outlet 12b.

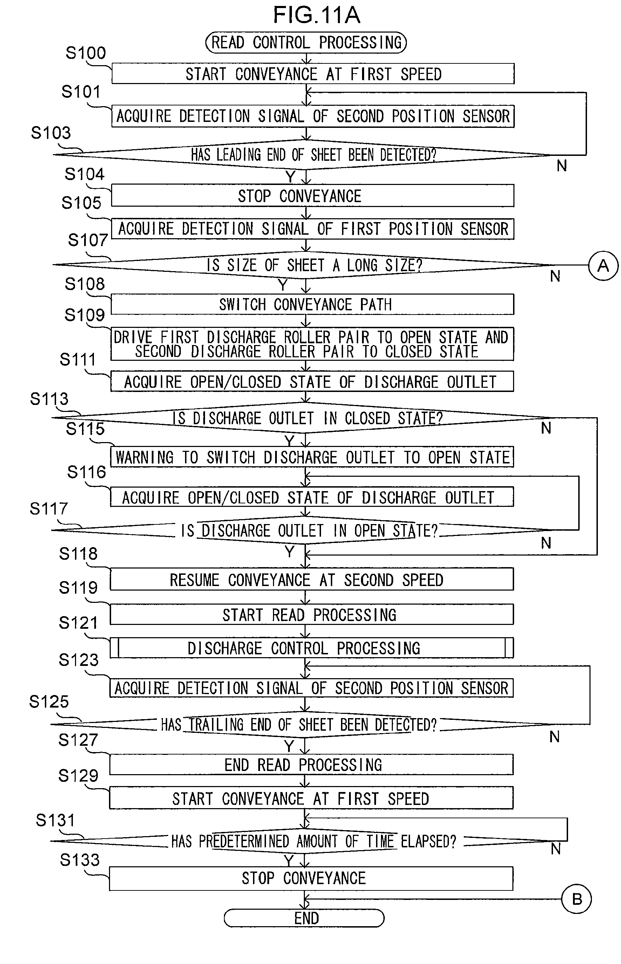

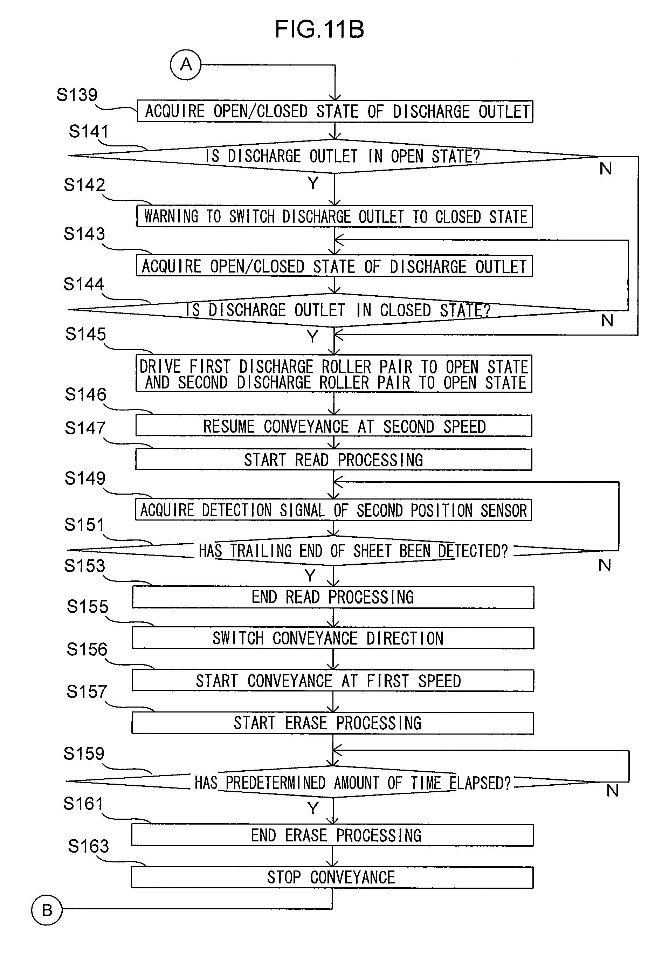

Next, the action of the reading device 2A when executing the read control processing pertaining to the present embodiment will be described. FIG. 11 is a flowchart showing a flow of processing by a read control processing program executed by the system control unit 40 of the reading device 2A at this time. This program is stored beforehand in a predetermined region of the ROM of the system control unit 40.

Furthermore, steps that are the same as the steps in the read control processing of the first embodiment will be assigned the same step numbers, and redundant description of those same steps will be omitted.

In the second embodiment, in a case where the determination in step S 107 is yes, that is, in a case where the size of the sheet S is a long size, the system control unit 40 moves to step S108 where it switches the switch member 38. That is, the system control unit 40 sets the switch member 38 to the direction in which the switch member 38 conveys the sheet S from the branching point 14d toward the discharge outlet 20.

In this way, in the present embodiment, the system control unit 40 switches the conveyance path of the sheet S in accordance with the size of the sheet S so that, in a case where the size of the sheet S is a long size, the sheet S is conveyed out from the discharge outlet 20. On the other hand, in a case where the size of the sheet S is not a long size, the sheet S is conveyed out to the sheet case C. Because of this, the same action and effects as those of the first embodiment are obtained.

### [Third Embodiment]

A reading system 1 pertaining to a third embodiment will be described in detail below using the attached drawings.

In the first embodiment, in a case where the size of the sheet S is long, the reading device 2 discharges the sheet S on which the read processing has been performed from the discharge outlet 20 without performing the erase processing. In contrast, in the third embodiment, in a case where the size of the sheet S is long, the reading device 2 performs the read processing in a state in which the section of the sheet S extending beyond the terminal end portion of the conveyance path 14a is allowed to project via the discharge outlet 20.

The configuration of the radiographic image reading system 1 pertaining to the third embodiment is the same as the configuration of the radiographic image reading system 1 pertaining to the first embodiment, so description will be omitted here.

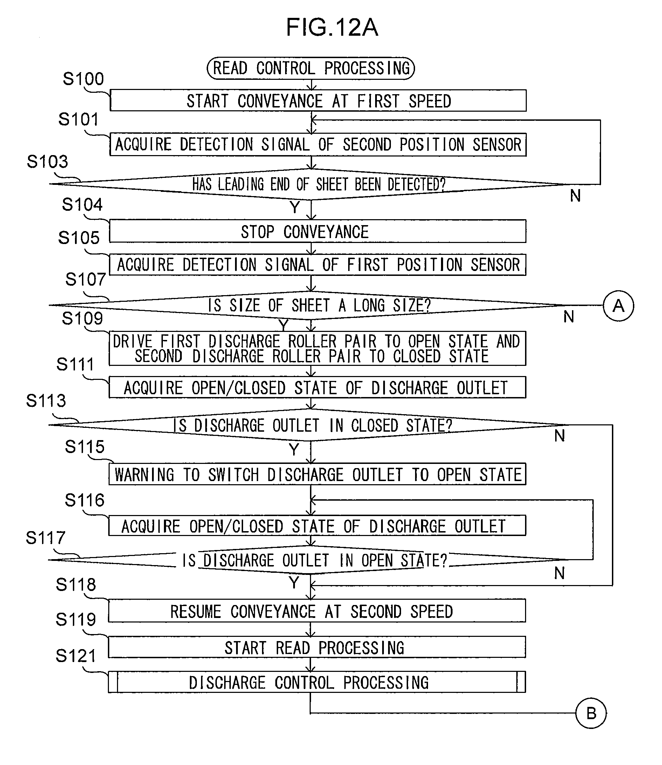

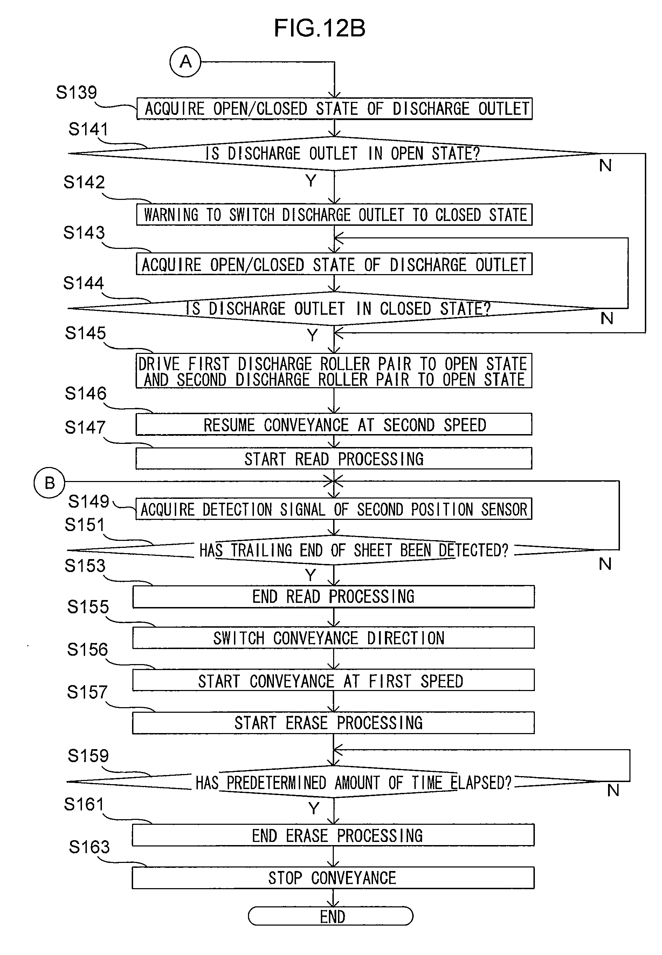

Next, the action of the reading device 2 when executing the read control processing pertaining to the present embodiment will be described. FIG. 12A and 12B are flowcharts showing a flow of processing by a read control processing program executed by the system control unit 40 of the reading device 2 at this time. This program is stored beforehand in a predetermined region of the ROM of the system control unit 40.

Furthermore, steps that are the same as the steps in the read control processing of the first embodiment and the second embodiment will be assigned the same step numbers, and redundant description of those same steps will be omitted.

In the third embodiment, the system control unit 40 moves to step S149 after performing the processing of step S121.

In this way, in the present embodiment, in a case where the size of the sheet S is long, the reading device 2 performs the read processing in a state in which part of the sheet S is allowed to project via the discharge outlet 20, switches the conveyance direction to the opposite direction after the read processing ends, conveys the sheet S, and puts the sheet S back into the sheet case C. Because of this, even in a case where the size of the sheet S is long, the reading device 2 can perform the read processing and the erase processing with respect to the sheet S with a continuous series of processes.

### [Fourth Embodiment]

A reading system 1 pertaining to a fourth embodiment will be described in detail below using the attached drawings.

In the first embodiment, the second embodiment, and the third embodiment, the cover member 22 is manually opened and closed, but in the fourth embodiment, the cover member 22 is driven, controlled, and opened and closed by the system control unit 40.

The configuration ofthe radiographic image reading system 1 pertaining to the fourth embodiment is the same as the configuration of the radiographic image reading system 1 pertaining to the first embodiment, so description will be omitted here. However, the cover member 22 of the reading device 2 pertaining to the fourth embodiment has a motor or hydraulic or other drive device (not shown in the drawings) that drives the cover member 22 to rotate. The cover member 22 of the present embodiment changes to either one of an open state or a closed state on the basis of the control by the system control unit 40.

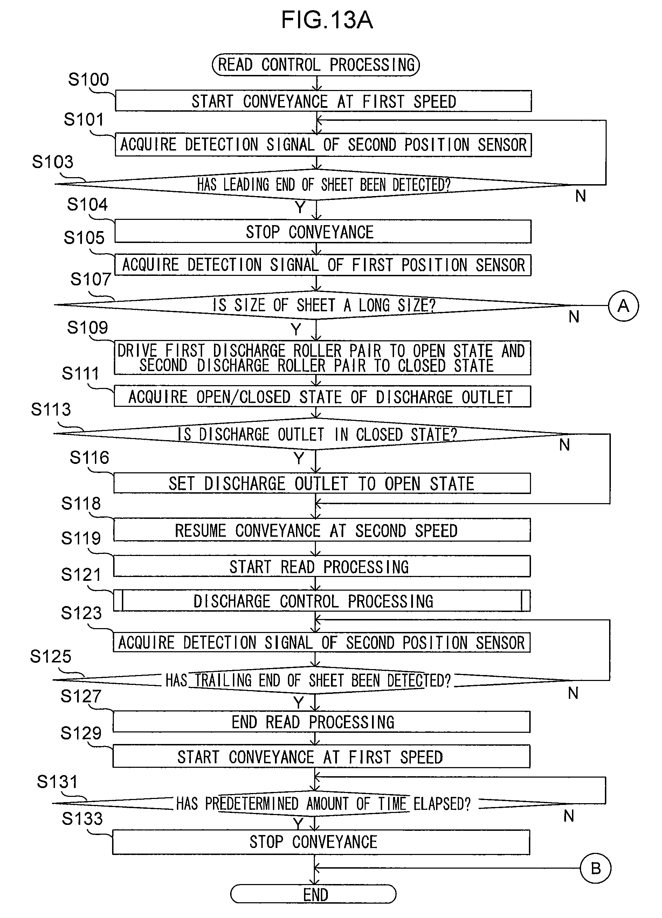

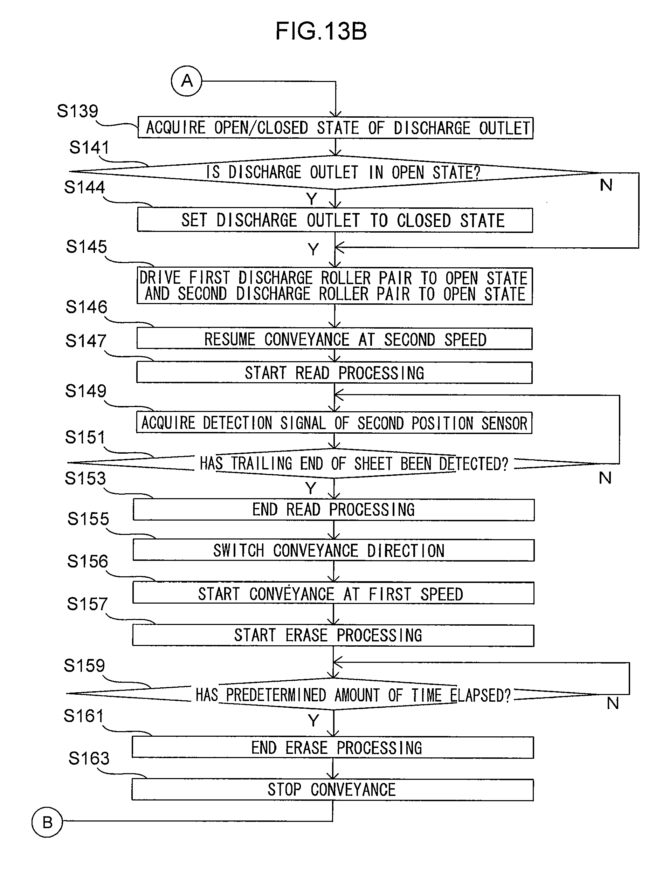

Next, the action of the reading device 2 when executing the read control processing pertaining to the present embodiment will be described with reference to FIG. 13A and 13B. FIG. 13A and 13B are flowcharts showing a flow of processing by a read control processing program executed by the system control unit 40 of the reading device 2 at this time. This program is stored beforehand in a predetermined region of the ROM of the system control unit 40.

Furthermore, steps that are the same as the steps in the read control processing of the first embodiment and the second embodiment will be assigned the same step numbers, and redundant description of those same steps will be omitted.

In the fourth embodiment, in a case where the determination in step S113 is yes, the system control unit 40 moves to step S 116 where it sets the discharge outlet 20 to an open state by driving the cover member 22 to an open state. Thereafter, the system control unit 40 moves to step S 118.

Furthermore, in a case where the determination in step S 141 is yes, the system control unit 40 moves to step S144 where it sets the discharge outlet 20 to a closed state by driving the cover member 22 to a closed state. Thereafter, the system control unit 40 moves to step S145.

In this way, in the present embodiment, the system control unit 40 controls the open/closed state of the cover member 22 in such a way that the discharge outlet 20 switches to an open state only in the case of discharging the sheet S via the discharge outlet 20. Because of this, a situation where the discharge outlet 20 is in a closed state despite the fact that the size of the sheet S is long and the sheet S ends up contacting the casing 10 is prevented. As a result, the sheet S is prevented from being damaged.

Embodiments of the present invention are described above, but the present invention is not limited to the embodiments as will be clear to those skilled in the art.

## Claims

1. A radiographic image reading device (2) comprising:
a casing (10) that has a conveyance inlet/outlet (12b) for conveying in and conveying out a storage phosphor sheet (S) on which a radiographic image is recorded, and a discharge outlet (20) for discharging the storage phosphor sheet;
an image reading unit (16) that is disposed inside the casing and that reads the radiographic image recorded on a storage phosphor sheet that has been conveyed in from the conveyance inlet/outlet; and
a conveyance unit (14) that is disposed inside the casing, that conveys the storage phosphor sheet that has been conveyed in from the conveyance inlet/outlet to a read position at which reading is performed by the image reading unit, and that conveys the storage phosphor sheet, from which the radiographic image has been read by the image reading unit, to the conveyance inlet/outlet or the discharge outlet.

2. The radiographic image reading device according to claim 1, further comprising a length judging unit (40a) that judges whether or not a length, with respect to a conveyance direction, of the storage phosphor sheet is equal to or greater than a predetermined threshold value.

3. The radiographic image reading device according to claim 2, further comprising a control unit (38a) that controls the conveyance unit, wherein:
in a case in which it has been judged by the length judging unit that the length, with respect to the conveyance direction, of the storage phosphor sheet is shorter than the predetermined threshold value, the control unit performs control, with respect to the conveyance unit, to cause the storage phosphor sheet to be conveyed along a reciprocal conveyance path that returns the storage phosphor sheet to the conveyance inlet/outlet by conveying the storage phosphor sheet back along the conveyance path travelled thus far, after the reading of the radiographic image by the image reading unit has ended; and
in a case in which it has been judged by the length judging unit that the length is equal to or greater than the threshold value, the control unit performs control, with respect to the conveyance unit, to cause the storage phosphor sheet to be discharged from the discharge outlet by performing only unidirectional conveyance on the reciprocal conveyance path, after the reading of the radiographic image by the image reading unit has ended.

4. The radiographic image reading device according to claim 2 or 3, wherein the predetermined threshold value is the length, along the conveyance path, of the storage phosphor sheet from the read position at which reading is performed by the image reading unit to the discharge outlet.

5. The radiographic image reading device according to claim 2, further comprising a control unit (38a) that controls the conveyance unit and the image reading unit, wherein:
in a case in which it has been judged by the length judging unit that the length, with respect to the conveyance direction, of the storage phosphor sheet is equal to or greater than the predetermined threshold value, the control unit performs control, with respect to the image reading unit and the conveyance unit, to cause the storage phosphor sheet to be read by the image reading unit while causing an end portion of the storage phosphor sheet to project from the casing via the discharge outlet, and the control unit performs control, with respect to the conveyance unit, to return the storage phosphor sheet to the conveyance inlet/outlet after the reading of the radiographic image by the image reading unit has ended; and
in a case in which it has been judged by the length judging unit that the length is shorter than the threshold value, the control unit performs control, with respect to the image reading unit and the conveyance unit, to cause the storage phosphor sheet to be read by the image reading unit without allowing an end portion of the storage phosphor sheet to project from the casing via the discharge outlet.

6. The radiographic image reading device according to any one of claims 2 to 5, further comprising an external input unit (38c) for inputting, from an external device, information indicating the length, with respect to the direction of conveyance by the conveyance unit, of the storage phosphor sheet, wherein the length judging unit performs the judgment on the basis of the length indicated by the information input by the external input unit.

7. The radiographic image reading device according to any one of claims 2 to 5, further comprising a length measuring unit (40a) that measures the length, with respect to the conveyance direction, of the storage phosphor sheet, wherein the length judging unit performs the judgment on the basis of the length measured by the length measuring unit.

8. The radiographic image reading device according to any one of claims 1 to 7, wherein the conveyance inlet/outlet is disposed at one end of a conveyance path of the conveyance unit, and the discharge outlet is disposed at the other end of the conveyance path.

9. The radiographic image reading device according to any one of claims 1 to 8, further comprising a blocking unit (24) that is disposed at the discharge outlet and that blocks incidence of light from outside the casing.

10. The radiographic image reading device according to any one of claims 1 to 9, wherein the discharge outlet is disposed such that it may be freely opened and closed.

11. The radiographic image reading device according to any one of claims 2 to 9, wherein the discharge outlet is disposed such that it may be freely opened and closed, and the radiographic image reading device further comprises:
a detection unit (36) that detects an open/closed state of the discharge outlet; and
a report unit (53, 54) that reports error information in a case in which the length, with respect to a conveyance direction of the conveyance unit, of the storage phosphor sheet is equal to or greater than a predetermined threshold value and the open/closed state detected by the detection unit is a closed state, or in a case in which the length is shorter than the predetermined threshold value and the open/closed state detected by the detection unit is an open state.

12. The radiographic image reading device according to claim any one of claims 2 to 9, wherein:
the discharge outlet is disposed such that it may be freely opened and closed; and
the radiographic image reading device further comprises a setting unit (40) that sets the discharge outlet to a closed state in a case in which it has been judged by the length judging unit that the length is shorter than the threshold value, and that sets the discharge outlet to an open state in a case in which it has been judged by the length judging unit that the length is equal to or greater than the threshold value.

13. A program for causing a computer of the radiographic image reading device according to claim 1 to function as:
a length judging unit that judges whether or not a length, with respect to a conveyance direction, of the storage phosphor sheet is equal to or greater than a predetermined threshold value; and
a control unit that, in a case in which it has been judged by the length judging unit that the length, with respect to the conveyance direction, of the storage phosphor sheet is shorter than the predetermined threshold value, performs control, with respect to the conveyance unit, to cause the storage phosphor sheet to be conveyed along a reciprocal conveyance path that returns the storage phosphor sheet to the conveyance inlet/outlet by conveying the storage phosphor sheet back along the conveyance path travelled thus far, after the reading of the radiographic image by the image reading unit has ended; and that, in a case in which it has been judged by the length judging unit that the length is equal to or greater than the threshold value, performs control, with respect to the conveyance unit, to cause the storage phosphor sheet to be discharged from the discharge outlet by performing only unidirectional conveyance on the reciprocal conveyance path, after the reading of the radiographic image by the image reading unit has ended.

14. A radiographic image reading method of the radiographic image reading device according to claim 1, the method comprising:
judging whether or not a length, with respect to a conveyance direction, of the storage phosphor sheet is equal to or greater than a predetermined threshold value;
in a case in which it has been judged that the length, with respect to the conveyance direction, of the storage phosphor sheet is shorter than the predetermined threshold value, performing control, with respect to the conveyance unit, to cause the storage phosphor sheet to be conveyed along a reciprocal conveyance path that returns the storage phosphor sheet to the conveyance inlet/outlet by conveying the storage phosphor sheet back along the conveyance path travelled thus far, after the reading of the radiographic image by the image reading unit has ended; and
in a case in which it has been judged that the length is equal to or greater than the threshold value, performing control, with respect to the conveyance unit, to cause the storage phosphor sheet to be discharged from the discharge outlet by having the conveyance unit perform only unidirectional conveyance on the reciprocal conveyance path, after the reading of the radiographic image by the image reading unit has ended.
